(19) Europäisches Patentamt / European Patent Office / Office européen des brevets

(11) **EP 2 288 932 B1**

(12) **EUROPÄISCHE PATENTSCHRIFT**

(45) Veröffentlichungstag und Bekanntmachung des Hinweises auf die Patenterteilung:
**19.08.2015 Patentblatt 2015/34**

(51) Int Cl.:
*G01S 15/02* *(2006.01)* *G01S 11/14* *(2006.01)*
*G01S 5/02* *(2010.01)*

(21) Anmeldenummer: **09738122.2**

(22) Anmeldetag: **27.04.2009**

(86) Internationale Anmeldenummer:
**PCT/EP2009/055081**

(87) Internationale Veröffentlichungsnummer:
**WO 2009/133078 (05.11.2009 Gazette 2009/45)**

(54) **Verfahren und Vorrichtung zur wahrscheinlichsten Distanzabschätzung zwischen Gegenständen**

Method and apparatus for estimating the most probable distance between objects

Procédé et appareil pour estimer la distance plus probable entre objets

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **28.04.2008 DE 102008021701**

(43) Veröffentlichungstag der Anmeldung:
**02.03.2011 Patentblatt 2011/09**

(73) Patentinhaber: **Fraunhofer-Gesellschaft zur Förderung der angewandten Forschung e.V.
80686 München (DE)**

(72) Erfinder:
• **RADUSCH, Ilja
  10178 Berlin (DE)**
• **PONTOW, Jens
  10585 Berlin (DE)**

(74) Vertreter: **Baumgärtel, Gunnar et al
Patentanwälte Maikowski & Ninnemann
Postfach 15 09 20
10671 Berlin (DE)**

(56) Entgegenhaltungen:
WO-A1-03/043374     WO-A1-2004/051303
WO-A2-2007/001660   US-A1- 2004 137 929
US-A1- 2005 065 740  US-A1- 2006 268 795

EP 2 288 932 B1

**Beschreibung**

Die Erfindung betrifft ein Verfahren gemäß Anspruch 1 und eine Vorrichtung mit den Merkmalen des Anspruchs 7.

In vielen Bereichen ist es notwendig, dass Gegenstände, insbesondere mobile Geräte im Freiraum oder auch in geschlossenen Räumen lokalisiert werden sollen. Unter einer Lokalisation kann hier verstanden werden, dass die räumliche Beziehung der Gegenstände untereinander und/oder die räumliche Beziehung der Gegenstände relativ zu einem Bezugssystem, wie einem festen Raum, bestimmt wird.

Es ist klar, dass dies auch Mischformen der Lokalisation einschließt, bei denen der Ort eines ersten mobilen Gerätes relativ zu einem festen Bezugssystem bestimmt wird, nämlich auf die Bestimmung des Abstandes der Gegenstände, z.B. zweier mobiler Geräte untereinander

Aus der US 6941246 B1 ist z.B. ein System bekannt, bei dem mobile Geräte selbst akustische Signale abgeben, um eine Verortung der mobilen Geräte zu erlauben.

Aus der US 6792118 B1 ist z.B. ein System bekannt, mit dem Zeitunterschiede beim Empfang zwischen zwei Mikrophonen bestimmt werden können.

Aus der US 2006/0077759 ist ein Identifizierungssystem bekannt, bei dem verschiedene Sender und Empfänger verwendet werden.

Aus des US 2006/0268795 A1 ist ein Positionsbestimmungsverfahren bekannt, bei dem die einzelnen Gegenstände aktiv Signale aussenden.

Die US 2004/137929 A1 beschreibt ein Kommunikationssystem bei dem Daten akustisch gesendet und / oder empfangen werden. Eine Positionsbestimmung von Geräten ist aufgrund gesendeter Signale möglich.

Die WO 2007/001660 A2 betrifft eine Lokalisierung eines mobilen Gerätes mittels Wi-Fi, FM, AM oder anderer Signale.

Aus der US 2002/0167862 ist ein Verfahren und eine Vorrichtung zur akustischen Verortung von Eingabeaktionen bekannt, die Input für ein elektronisches Eingabemittel darstellen können.

Mit den bekannten Verfahren und Vorrichtung ist es jedoch nicht möglich, komplexe Anordnungen von Gegenständen relativ zueinander zu verorten, ohne dass die Gegenstände z.B. selbst Signale aussenden oder dass eine Kalibrierung mittels eines bekanten Ortes erforderlich ist.

Der vorliegenden Erfindung liegt die Aufgabe zugrunde, ein Verfahren zu schaffen, mit dem diese flexible Verortung, insbesondere eine Selbslokalisation möglich ist.

Diese Aufgabe wird erfindungsgemäß durch ein Verfahren mit den Merkmalen des Anspruchs 1 gelöst.

Mit Mikrofonvorrichtungen der Gegenstände wird mindestens ein akustisches Signal mindestens einer akustischen Quelle empfangen. Mit einer Datenverarbeitungsvorrichtung wird der zeitliche Verlauf des jeweils empfangenen akustischen Signals automatisch anhand vorgegebner Kriterien nach mindestens einem Muster durchsucht und in Abhängigkeit vom Empfang des mindestens einen Musters erfolgt mittels einer Zeitsynchronisation, über die die Gegenstände gekoppelt sind, eine Ermittlung der wahrscheinlichsten Distanzabschätzung zwischen den Gegenständen.

Dabei ist das mindestens eine Muster ein Onset des mindestens einen akustischen Signals ist oder das akustische Signal weist ein Onset auf und das Onset ist ein Ton, ein Geräusch, ein Tonmuster und / oder ein Geräuschmuster, das aus der Umgebung der Gegenstände stammt, nämlich ein ambientes Geräusch und / oder ein ambienter Ton.

Dabei wird mit Hilfe des gemessenen Laufzeitunterschieds zwischen jeweils zwei ermittelten und als wahrscheinlich gleich eingestuften Mustern im akustischen Signal ein Wert für die Distanzabschätzung ($Weg_{min}$) zwischen den mobilen Gegenstanänden ermittelt, der eine Entfernung zwischen den zwei Mikrofonvorrichtungen als Minimal-Distanzabschätzung darstellt, wobei

Mittels der Datenverarbeitungsvorrichtung erfolgt eine statistische Analyse über eine Reihe von Minimal-Distanzabschätzungen zur Bestimmung der wahrscheinlichsten Distanzabschätzung der Gegenstände, wobei die statistische Analyse eine Auswertung einer Klasseneinteilung von Distanzmessungen umfasst, und wobei die Maximal-Häufigkeit der aggregierten mindestens einen Minimal-Distanzabschätzung die charakteristische Distanz-Klasse bildet.

Die Datenverarbeitungsvorrichtung kann ein verteiltes System sein, das ganz außerhalb der Gegenstände angeordnet ist, es kann teils in den Gegenständen, teils separat angeordnet sein oder es kann vollständig in den Gegenständen angeordnet sein, so dass die Gegenstände untereinander Daten austauschen.

Damit ist es allein auf Grund des Empfangs eines akustischen Signals mit einem Muster möglich, den mindestens einen Gegenstand zu verorten.

Mittels der Datenverarbeitungsvorrichtung wird eine statistische Analyse des beim mindestens einen Gegenstand eingehenden mindestens einen akustischen Signals zur Bestimmung der wahrscheinlichsten Position des Gegenstandes und/oder der wahrscheinlichsten Position mindestens zweier Gegenstände ausgeführt. Damit lassen sich auch bei verrauschten Signalen Positionsbestimmungen durchführen.

Mit Vorteil wird aus den zeitlichen Daten des Eintreffens des mindestens einen Musters und den daraus resultierenden unterschiedlichen Laufzeiten bei mindestens zwei Gegenständen automatisch ein Abstand zwischen den mindestens zwei Gegenständen ermittelt. Dieses Verfahren ist grundsätzlich auch auf mehr als zwei Gegenstände gleichzeitig anwendbar.

Vorteilhaft ist es, wenn das mindestens eine Muster ein Onset des mindestens einen akustisches Signals ist, nämlich eine plötzliche Lautstärkeänderung und/oder eine Schalldruckänderung nach einer vorhergehenden Phase relativer Ruhe und/oder ein auf Grund des Doppler-Effektes generiertes Signal. Diesen Mustern ist gemeinsam, dass sie aus einem komplexeren akustischen Signal extrahierbar sind.

Ferner ist es vorteilhaft, wenn die Durchsuchung nach dem mindestens einen Muster auf Grund einer Eigenschaft des mindestens einen akustischen Signals erfolgt, die unabhängig vom Ausbreitungsweg des akustischen Signals ist. Beispiele für diese Eigenschaften sind z.B. die Nulldurchgänge eines zeitlich veränderlichen Signals. Grundsätzlich sind die Frequenz und die Wellenform eines akustischen Signals relativ unabhängig vom Ausbreitungsweg. Bei der Suche nach einem Muster soll herausgefunden werden, dass ein für die Verortung der Gegenstände wahrscheinlich verwertbares Signalmuster vorliegt. Um die Laufzeitunterschiede festzustellen, müssen diese Signalmuster nach ihrem Ursprung gruppiert werden. Die Nulldurchgänge und / oder andere Eigenschaften werden dazu verwendet, um die gefundenen Onsets zu gruppieren. Ist bekannt, dass zwei gefundene Onsets mit hoher Wahrscheinlichkeit von demselben akustischen Signal verursacht wurden, so kann man die Distanz mit Hilfe des Laufzeitunterschieds nach unten abschätzen. Es entsteht eine Aussage der Form: Die Distanz zwischen den beiden Mikrophonen ist mindestens so groß wie die Ausbreitungsgeschwindigkeit mulitipliziert mit dem Laufzeitunterschied.

Vorteilhafterweise wird das mindestens eine Muster durch eine Frequenzanalyse, mittels einer dominierenden Frequenz, anhand der Amplitude des mindestens einen akustischen Signals, auf Grund der Anzahl der Nulldurchgänge, eine Lauflängencodierung und/oder der Wellenform des mindestens einen akustischen Signals erkannt und / oder charakterisiert wird. Diese Parameter sind gut dafür geeignet, ein Muster innerhalb eines akustischen Signals zu ermitteln oder zu charakterisieren.

Die Aufgabe wird auch durch eine Vorrichtung mit den Merkmalen des Anspruchs 7 gelöst.

Die Erfindung wird nachfolgend unter Bezugnahme auf die Figuren der Zeichnungen an mehreren Ausführungsbeispielen näher erläutert. Es zeigen:

Fig. 1 eine schematische Darstellung der Lokalisation zweier mobiler Geräte;

Fig. 2 eine schematische Darstellung eines Musters in einem akustischen Signal;

Fig. 2A eine schematische Darstellung eines Klassifizierers für ein akustisches Signal;

Fig. 3 ein Histogramm zur Bestimmung der charakteristischen Distanz-Klasse;

Fig. 4 eine schematische Darstellung einer Amplituden Approximation;

Fig. 5 eine schematische Darstellung von Null-Durchgängen;

Fig. 6 eine schematische Darstellung einer Lauflängenkodierung;

Fig. 7 eine schematische Darstellung des Güte der Entfernungsschätzung zwischen zwei Gegenständen.

Im Folgenden werden verschiedene Anwendungsbeispiele dargestellt, bei denen eine Lokalisation zwischen mobilen Geräten 10, 11 erfolgt. Grundsätzlich ist die Erfindung auch für die Lokalisation stationärer Gegenstände 10, 11 einsetzbar, so dass die Darstellung der folgenden Beispiele nicht einschränkend verstanden werden kann. Mit einer Lokalisation kann hier insbesondere auch eine Selbstlokalisation der Gegenstände, oder auch der mobilen Geräte erfolgen.

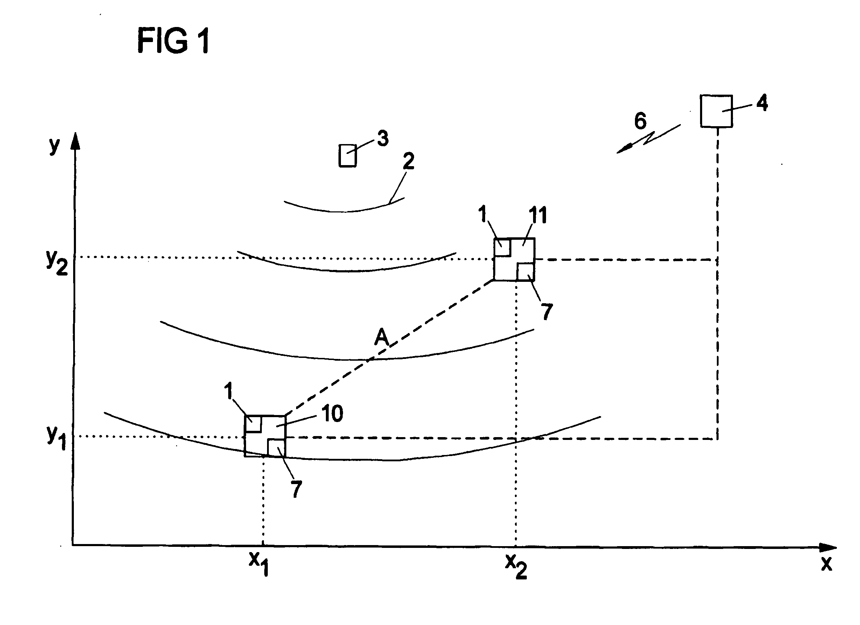

In Fig. 1 sind in schematischer Weise zwei mobile Geräte 10, 11 dargestellt, die im vorliegenden Ausführungsbeispiel als Mobiltelefone ausgebildet sind. Grundsätzlich stellen die mobilen Geräte 10, 11 autonome Systeme dar, die z.B. von einem Benutzer mit sich geführt werden können oder die sich autonom bewegen können, wie z.B. Roboter in einer Werkhalle.

Der Raum, in dem sich die beiden mobilen Geräte 10, 11 befinden ist aus Gründen der Einfachheit hier auf zwei Dimensionen reduziert worden, so dass der Ort jedes der mobilen Geräte 10, 11 durch Koordinaten $(x_i, y_i)$ beschrieben werden kann. Der Abstand der mobilen Geräte 10, 11 wird im vorliegenden Fall mit A bezeichnet.

Grundsätzlich können sich die mobilen Geräte 10, 11 auch in einem drei dimensionalen Raum bewegen, so dass die Orte der Geräte durch Koordinaten $(x_i, y_i, z_i)$ beschrieben werden.

Die mobilen Geräte 10, 11 weisen Mikrofonvorrichtungen 1 auf, mit denen akustische Signale 2 aus der Umgebung aufgenommen werden. In Fig. 1 ist eine akustische Quelle 3 dargestellt, die ein solches akustisches Signal 2 abstrahlt. Unter einem akustischen Signal soll ein Signal in einer Druckschwankung verstanden werden, in dem sich eine Schallwelle ausbreitet. Das Medium ist in den folgenden Beispielen Luft, wobei grundsätzlich auch eine Lokalisation von Gegenständen in einem flüssigen Medium (z.B. Wasser) möglich ist. Bei Kenntnis der Ausbreitungsgeschwindigkeit kann eine Lokalisation auch über Phasengrenzen hinweg erfolgen. Unter einem akustischen Signal wird dabei nicht nur ein Signal im hörbaren Frequenzbereich (ca. 16 bis 20.000 Hz) verstanden, sondern das akustische Signal kann auch Anteile im Infra- und/oder im Ultraschallbereich haben.

Diese Quelle 3 muss nicht so geartet sein, dass sie für die Ausstrahlung eines akustischen Signals ausgebildet sein muss. Es könnte z.B. ausreichen, wenn zwei mobile Geräte 10, 11 zu unterschiedlichen Zeiten ein lautes, relativ kurz andauerndes Geräusch oder eine plötzliche Änderung eines akustischen Signals 2 registrieren. Wenn zwei mobile Geräte 10, 11 in einem Raum angeordnet werden, kann es z.B. ausreichen, den Trittschall umhergehender Personen zu registrieren. Damit wird deutlich, dass die mindestens eine Quelle 3 nicht stationär sein muss.

Die Form des Musters 5 in diesen akustischen Signalen 2 wird von beiden mobilen Geräten 10, 11 im Wesentlichen identisch (vielleicht unterschiedlich verrauscht oder in unterschiedlicher registriert, nur zu unterschiedlichen Zeiten).

Auch ist in Fig. 1 aus Gründen der Übersichtlichkeit nur eine akustische Quelle 3 dargestellt, wobei die im Folgenden beschriebene Lokalisation der mobilen Geräte 10, 11 auch mit mehreren akustischen Quellen 3 funktioniert.

Wie später noch deutlich werden wird, muss die akustische Quelle 3 nicht stationär sein, sondern sie kann sich auch im Raum bewegen.

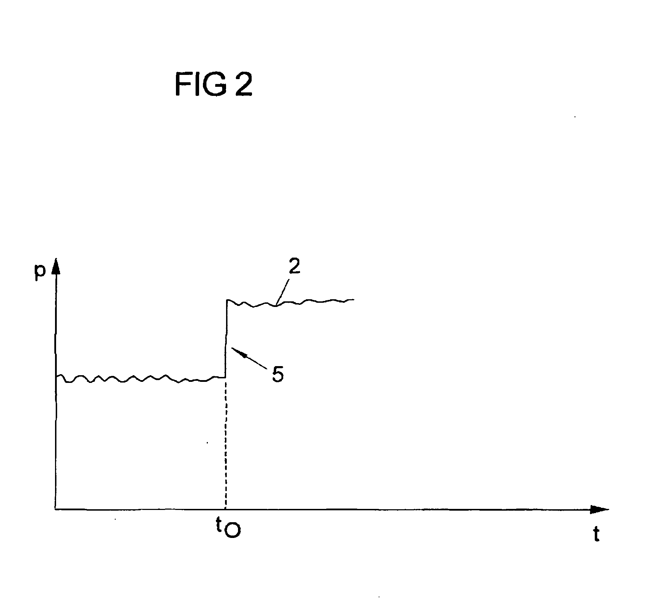

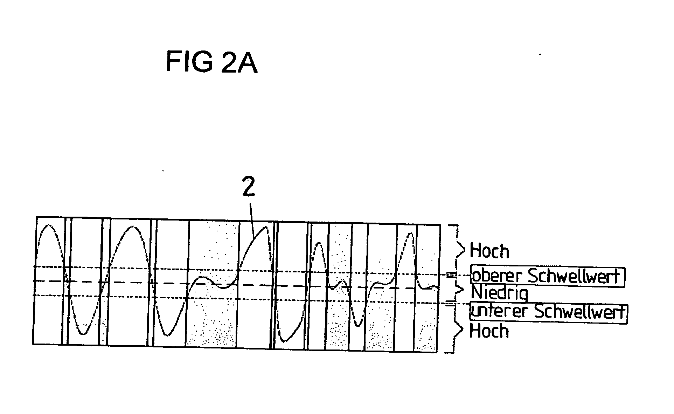

Die Mikrofonvorrichtungen 1 der mobilen Geräte 10, 11 nehmen das akustische Signal 2 auf. Da die mobilen Geräte 10, 11 sich in unterschiedlichem Abstand zu der akustischen Quelle befinden, registrieren sie ein bestimmtes akustisches Signal auf Grund der unterschiedlichen Laufzeit zu unterschiedlichen Zeiten. In Fig. 2 ist schematisch der Schalldruck p eines akustischen Signals 2 über der Zeit t aufgetragen. Bis zu einem Zeitpunkt $t_o$ ist der Schalldruck relativ niedrig. Nach dem Zeitpunkt $t_o$ ist der Schalldruck p wesentlich höher. Eine Person würde diese Änderung als plötzliche Änderung von "leise" nach "laut" wahrnehmen. Somit enthält das akustische Signal 2 ein Muster 5, nämlich den als Onset bezeichneten Wechsel des Schalldrucks p. Dabei können Schwellwerte für das akustische Signal 2 definiert werden, deren Über- oder Unterschreiten dazu führen, dass ein Zähler für den Onset einsetzt.

Somit kann durch Zählen von Auslösesignalen, das Überschreiten und Unterschreiten der Schwellwerte registriert werden, so dass sich ein Muster 5 charakterisieren lässt. In Fig. 2A ist eine solche Klassifizierung für akustische Signale mittels Schwellwerten dargestellt. In Fig. 2A ist eine Schalldruckkurve als akustisches Signal 2 dargestellt, die in unregelmäßigen Abständen einen oberen und einen unteren Schwellwert durchläuft. In den grau gekennzeichneten Bereichen befindet sich der Schalldruck zwischen den Schwellwerten. Damit ist eine einfache Digitalisierung des akustischen Signals 2 möglich. Der Bereich zwischen den Schwellwerten kann als "relative Stille" interpretiert werden. Der Bereich außerhalb der Schwellwerte kann als "relativ Laut" interpretiert werden.

Die Mikrofonvorrichtungen 1 registrieren die Änderung des Schalldrucks p zu unterschiedlichen Zeiten.

Grundsätzlich kann als Onset ein Ton, ein Geräusch, ein Tonmuster und / oder ein Geräuschmuster verwendet werden, das aus der Umgebung der Gegenstände stammt, d.h. ein ambientes Geräusch und / oder ein ambienter Ton. Wenn das Muster 5 Geräusche oder Töne aus der Umgebung auswertet, wird keine eigene Energie zur Erzeugung eines Ortungssignals benötigt, was eine Energieeinsparung zur Folge hat.

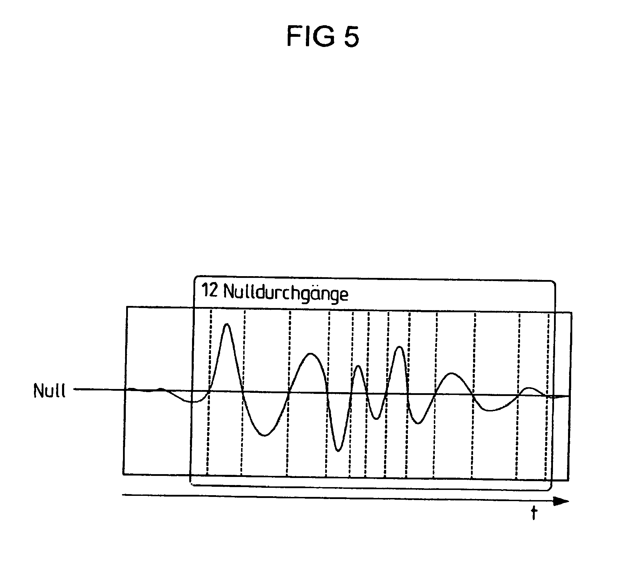

Grundsätzlich ist es auch möglich, andere Parameter zur Erkennung und / oder Charakterisierung der Muster 5 zu verwenden. Dazu könnten dominante Frequenzen mittels einer Fourier-Analyse ermittelt werden. Auch könnten Eigenschaften der Amplituden oder die Anzahl der Nulldurchgänge ermittelt werden (siehe auch Fig. 5). Ein weiterer Parameter, der zur Identifikation der Muster 5 verwendet werden kann ist, die Lauflängenkodierung (Run Length Encoding).

Die Lauflängenkodierung ist dafür gedacht, den Anfangsabschnitt eines gefundenen Onsets (oder auch eines andersartigen Klangereignisses oder Musters) zu beschreiben. Diese Beschreibung (oder auch Charakterisierung) sollte unabhängig von der Amplitude des gefundenen Signals erfolgen, um die unterschiedliche Lauflänge zu den einzelnen Mikrophonen der Vorrichtung und somit die unterschiedliche Lautstärke des dort ankommenden Signals zu kompensieren.

In Fig. 1 ist ein externer Teil einer Datenverarbeitungsvorrichtung 4 dargestellt, der eine Zeitsynchronisierung 6 für die mobilen Geräte 10, 11 zur Verfügung stellt. Ein interner Teil der Datenverarbeitungsvorrichtung 7 in den mobilen Geräten 10, 11 durchsucht automatisch eingehende akustische Signale nach Mustern 5, die Aufschluss über die relativen Positionen der mobilen Geräte 10, 11 zur akustischen Quelle 3 geben können. Welche Funktionalitäten der Datenverarbeitungsvorrichtung 4, 7 extern zu den mobilen Geräten 10, 11 oder intern in den mobilen Geräten 10, 11 ausgebildet sind, hängt vom Verwendungszweck ab. Grundsätzlich ist es möglich und auch vorteilhaft, wenn die gesamte Datenverarbeitungsvorrichtung in einem oder mehreren Gegenständen, insbesondere in den mobilen Geräten 10, 11 angeordnet ist, die untereinander Daten austauschen.

Auf Grund der Zeitsynchronisation 6, z.B. durch Funkwellen, kann der Abstand der mobilen Geräte 10, 11 von der akustischen Quelle 3 berechnet werden. Für die Berechnung können die Emissionszeit (Anfangszeit) und / oder die Ankunftszeit des Signals 2 verwendet werden. Wenn der Standort der akustischen Quelle 3 bekannt ist, kann eine genauere Lokalisation der mobilen Geräte 10, 11 erfolgen.

Im obigen Beispiel ist das Muster 5 in einer Schalldruckkurve enthalten. Grundsätzlich kann das Muster 5 auch aus anderen Parametern eines akustischen Signals gebildet werden, wie z.B. der Frequenz, der Amplitude oder der Wellenform. Auch kann das Muster 5 auf einer Frequenzänderung beruhen, die sich auf Grund der Bewegung ergibt (Doppler-Effekt). Auch Kombinationen dieser Merkmale sind zur Bildung eines Musters 5 möglich. Das Muster 5 stellt somit ein Signal dar, dass im akustischen Signal 2 eingebettet ist, aber anhand bestimmter vorgebbarer Kriterien von anderen Teilen des akustischen Signals 2 unterscheidbar ist. Auch sind diese Arten von Mustern unabhängig vom Ausbreitungsweg des akustischen Signals 2. Grundsätzlich ändern sich die Frequenz und die Wellenform akustischer Signale in Abhängigkeit vom Ausbreitungsweg nicht oder nur sehr wenig.

Eine Möglichkeit besteht darin, dominierende Frequenzen mittels einer Fourier-Analyse, insbesondere einer FFT, zu ermitteln.

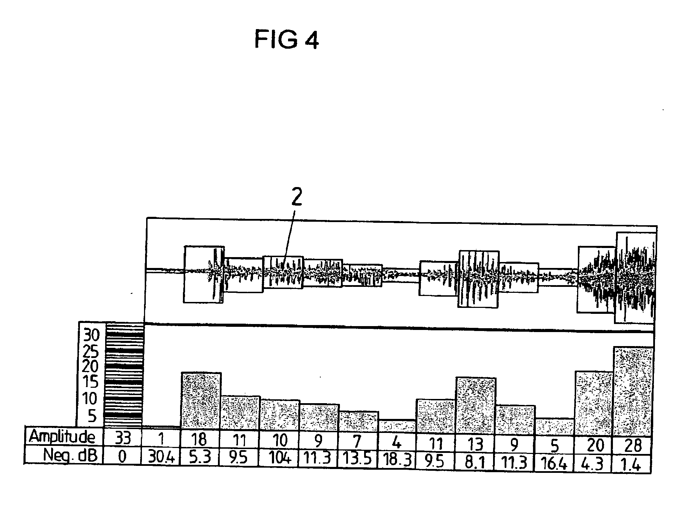

In Fig. 4 ist ein Beispiel für die Erfassung der Amplituden, d.h. ein Kriterium der Wellenform dargestellt. Im oberen Teil der Fig. 4 ist ein akustisches Signal 2 dargestellt, über dass fortlaufend Fenster gleicher Breite gelegt werden. Die Höhe der Fenster ist gleich der maximalen plus der minimalen Amplitude des akustischen Signals in den Fenstern. Mit diesem einfach zu berechnenden Maß kann die Amplitude des Signals in einfacher Weise approximiert werden. Die Höhen sind unterhalb des Signals in Form eines Balkendiagrams dargestellt. In der darunterliegenden Tabelle werden die Werte für die Amplituden-Approximation und die gemessenen Amplituden in negativen Dezibel mit Bezug auf die maximal mögliche Amplitude dargestellt.

In Fig. 5 ist dargestellt, wie das akustische Signal 2 durch die Auswertung von Nulldurchgängen charakterisiert werden kann. In Fig. 5 sind 12 Nulldurchgänge dargestellt, die durch vertikale gestrichelte Linien dargestellt werden. Nulldurchgänge sind zur Charakterisierung des akustischen Signals geeignet, da die Anzahl der Durchgänge unabhängig von der Entfernung ist.

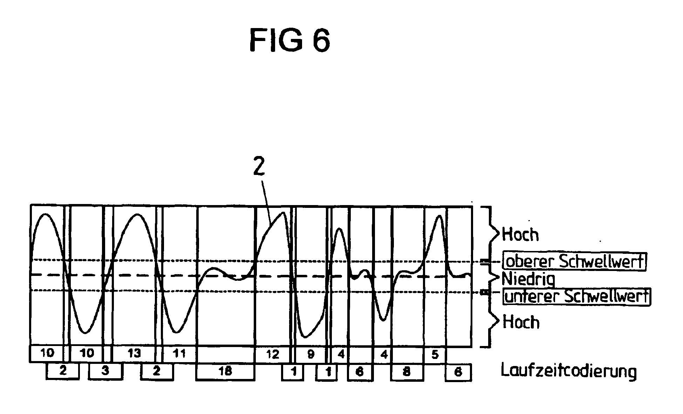

In Fig. 6 ist ein eine Laufzeitenkodierung des Signals 2 dargestellt, das bereits in Fig. 2A dargestellt wurde. Durch die Laufzeitenkodierung wird das Signal 2 diskretisiert, um es speichereffizient versenden zu können. Die Zahlen unterhalb der Graphik geben an, in welchen Zeiträumen sich das Signal außerhalb der Schwellwerte bzw. innerhalb der Schwellwerte aufhält. Das Signal 2 wird normalisiert, um es weitgehend unabhängig von Amplitudenunterschieden, die z.B. aus unterschiedlichen Mikrophoncharakteristiken stammen können, zu machen. Durch die Normalisierung kann eine Lautstärkenkalibrierung der u.U. räumlich verteilten Mikrofone entfallen.

Diese Möglichkeiten der Charakterisierung akustischer Signale können einzeln oder auch in Kombination verwendet werden.

Mit Hilfe des gemessenen Zeitunterschieds zwischen jeweils zwei ermittelten Mustern 5 (Onsets gleicher Herkunft) im akustischen Signal wird ein Minimalwert für die Distanzabschätzung (Weg$_{min}$) zwischen den mobilen Geräten 10, 11 ermittelt, der die Entfernung A zwischen den zwei Mikrofonvorrichtungen nach unten hin abschätzt. Diese Werte werden nachfolgend als Minimal-Distanzabschätzung bezeichnet und berechnen sich durch folgende Formel:

$$\text{Weg}_{\text{Min}} = \text{Schallgeschwindigkeit} * |(\text{TOA1} - \text{TOA2})|$$

mit

Weg$_{\text{Min}}$: Minimalwert der Distanz zwischen den mobilen Geräten 10, 11

Schallgeschwindigkeit: Ausbreitungsgeschwindigkeit akustischer Signale 2 in Luft

TOA1: Ankunftszeit des akustischen Signals 2 am ersten mobilen Gerät 10

TOA2: Ankunftszeit des akustischen Signals 2 am zweiten mobilen Gerät 11

Somit ist die Entfernung zwischen den beiden mobilen Geräten 10, 11 mindestens so groß wie die Minimal-Distanzabschätzung. In analoger Weise könnte auch bei stationären Gegenständen 10, 11 verfahren werden.

Die so ermittelten Minimal-Distanzabschätzungen werden für eine spätere Bearbeitung von der Datenverarbeitungsvorrichtung 4, 7 gespeichert.

Im Folgenden wird dargelegt, wie diese Informationen des Musters 5 weiter im Rahmen einer Lokalisation der mobilen Geräte 10, 11 verwendbar sind.

Ein Punkt ist dabei, dass zwei registrierte Muster 5 miteinander verglichen werden müssen, damit festgestellt werden kann, dass identische Muster 5 von unterschiedlichen Geräten 10, 11 empfangen wurden.

Wenn z.B. die zu vergleichenden Muster 5 vier dominante Frequenzen aufweisen, so werden die Energien der vier Frequenzen normalisiert, um die Muster 5 vergleichbar zu machen. Dann erfolgt eine Zuordnung der einzelnen Frequenzen der Muster 5. Anschließend kann ein Maß für die normalisierten Energieunterschiede berechnet werden. Wenn vorher ein Schwellenwert für noch akzeptable Unterschiede festgelegt wird, kann automatisch ermittelt werden, ob die Muster 5 im Rahmen der Definition übereinstimmen oder nicht.

In ähnlicher Weise, d.h. mittels Normalisierung und Vergleich der Amplituden können die in Zusammenhang mit Fig. 4 dargestellten Amplituden-Approximationen bearbeitet werden, um einen Vergleich zwischen den empfangenden Mustern 5 zu ermöglichen. Grundsätzlich kann auch eine Lauflängenkodierung verwendet werden.

Für den Vergleich der Ankunftszeiten des akustischen Signals 2 müssen die Zeiten einzelner Mustererkennungen von unterschiedlichen Mikrofonvorrichtungen 1 beziehungsweise mobilen Geräten 10, 11 vergleichbar sein. Um diese zeitliche Vergleichbarkeit zu gewährleisten, wird mittels einer geeigneter Zeitsynchronisation 6 eine einheitliche Netzwerkzeit für die mobilen Geräte 10, 11 etabliert. Grundsätzlich ist es auch möglich, im Nachhinein eine zeitliche Vergleichbarkeit der Messergebnisse herzustellen. Dies ist z.B. im Rahmen einer Post-Facto Time Synchronisation möglich.

Diese zeitliche Synchronisierung 6 der einzelnen mobilen Geräte 10, 11 kann zum Beispiel mit Hilfe von Funksignalen erzielt werden, die als zeitliche Referenz dienen. Es kann jedoch jede andere Art der zeitlichen Synchronisierung 6 zu diesem Zweck genutzt werden, die eine ausreichende zeitliche Präzision aufweist.

Die beschriebene Berechnung der Minimal-Distanzabschätzung zwischen den einzelnen mobilen Geräten 10, 11 wird möglich durch die Kenntnis der Schallgeschwindigkeit und die Vergleichbarkeit der Samplezeiten einzelner teilnehmender mobiler Geräte 10, 11 (oder auch stationärer Gegenstände 10, 11). Hierfür wird eine jeweils konstante Schallgeschwindigkeit ($C_{Luft}$) angenommen, die sich mit Kenntnis der Lufttemperatur hinreichend genau abschätzen lässt. Für die Abschätzung der Schallgeschwindigkeit in Luft (im Bereich zwischen -20 °C und 40°C) kann folgende Formel benutzt werden:

$$C_{Luft} = 331,3 + (0,6 * Temperatur_{Luft})\ [m*s^{-1}]$$

$C_{Luft}$ : Schallgeschwindigkeit in Luft gemessen in $[m*s^{-1}]$

$Temperatur_{Luft}$: Lufttemperatur in Grad Celsius

Wenn mindestens eines der mobilen Geräte 10, 11 eine Thermometervorrichtung aufweist, so kann die für diese Berechnung der Schallgeschwindigkeit benötigte Temperatur bestimmt werden.

Ansonsten könnte die hierfür benötigte Temperatur mit Hilfe von Erfahrungswerten festgelegt werden.

Im Laufe der Zeit entsteht somit eine Reihe von Minimal-Distanzabschätzungen, die gespeichert werden. Für jeweils ein Paar der zu lokalisierenden mobilen Geräte 10, 11 (oder auch stationärer Gegenstände 10, 11) können dann alle diese Minimal-Distanzabschätzungen herangezogen werden, um die Entfernung zwischen den beiden mobilen Geräten 10, 11 zu bestimmen. Hierbei wird angenommen, dass die Position eines mobilen Gerätes 10, 11 ungefähr gleich der der Mikrofonvorrichtung 1 des jeweiligen mobilen Gerätes 10, 11 ist. Die Gesamtabschätzung der Distanz zwischen jeweils zwei mobilen Geräten 10, 11 wird nachfolgend als Gesamt-Distanzabschätzung benannt.

Eine Möglichkeit der Gesamt-Distanzabschätzung ergibt sich durch eine statistische Auswertung der gemessenen Muster 5, z.B. über die Auswertung eins Histogramms aller Minimal-Distanzabschätzungen zu jeweils zwei Gegenständen 10, 11. So wird die maximale Distanz-Klasse des Histogramms ermittelt, die noch eine signifikante Relevanz aufweist. Diese Distanz-Klasse wird nachfolgend charakteristische Distanz-Klasse genannt.

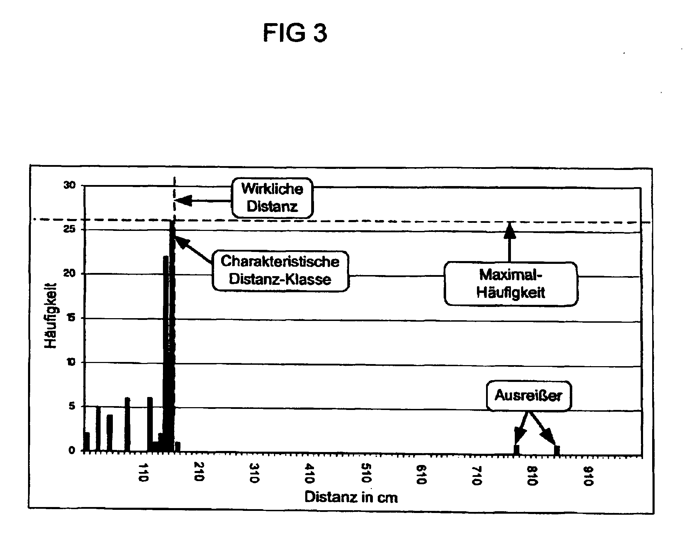

Fig. 3 zeigt ein solches Histogramm mit einer festen Klassenweite von jeweils 10 cm.

Die tatsächliche Distanz zwischen den beiden mobilen Geräten 10, 11 beträgt in diesem Beispiel 1,6 m. Die Maximal-Häufigkeit beträgt 26 und wird von der Klasse verursacht, die die Minimal-Distanzabschätzungen zwischen 1,5 m und 1,6 m aggregiert. Diese Distanz-Klasse ist in diesem Fall gleichzeitig die charakteristische Distanz-Klasse. In Fig. 3 haben alle Distanz-Klassen, die Minimal-Distanzabschätzungen höherer Entfernung aggregieren, eine sehr viel niedrigere Häufigkeit als die Maximal-Häufigkeit. Somit erhalten diese Distanz-Klassen eine niedrigere Relevanz und werden nicht als charakteristische Distanz-Klasse angesehen. Die Ausreißer am rechten Rand des Histogramms sind das Resultat von Messungenauigkeiten oder sonstigen Unzulänglichkeiten, wie z.B. Fehlern bei der Charakterisierung oder Fehlern beim Vergleich von Onsets.

Mit einer solchen statistischen Analyse kann auch bei einer verrauschten Umgebung eine sichere Lokalisierung vorgenommen werden.

Die Weite der Klassen dieses Histogramms in Metern werden der Aufgabenstellung entsprechend geeignet festgelegt werden. Die Relevanz einer Klasse eines so erstellten Histogramms richtet sich nach der Häufigkeit der Minimal-Distanzabschätzungen.

Bei der Ermittelung der Gesamtabschätzung der Distanz zwischen jeweils zwei mobilen Geräten 10, 11 werden Klassen mit höherer Distanzabschätzung denen mit niedrigerer Distanzabschätzung vorgezogen behandelt, indem sie eine höhere Relevanz erhalten. Somit kann ein Algorithmus die charakteristische Distanz-Klasse eines jeden Histogramms ermitteln.

Um die charakteristische Distanz-Klasse des Histogramms zu finden, wird eine Distanz-Klasse gesucht, die die größte minimale Distanzschätzung zwischen den beiden zu lokalisierenden mobilen Geräten 10, 11 aggregiert und gleichzeitig noch mindestens einen vorher definierten Bruchteil der Maximal-Häufigkeit des Histogramms aller Minimal-Distanzabschätzungen zu jeweils zwei Gegenständen 10, 11 aufweist. Als Beispiel eines solchen Bruchteils haben wir die Häufigkeit von einem Viertel der Maximal-Häufigkeit festgelegt. Die Relevanz einer Distanz-Klasse kann somit durch die obere Grenze einer Distanz-Klasse in Metern festgelegt werden in Abhängigkeit, ob die jeweilige Distanz-Klasse noch eine relevante Häufigkeit aufweist. Weist eine Distanz-Klasse eine niedrigere Häufigkeit als den geforderten Bruchteil der Maximal-Häufigkeit auf, so besitzt sie die niedrigste Relevanz von 0.

Zusätzlich zur Gesamt-Distanzabschätzung, kann deren Güte ermittelt werden. Diese Güte schätzt ab, wie belastbar oder aussagekräftig eine so gewonnene Gesamt-Distanzabschätzung für den nachfolgenden Vorgang der Topologie-Rekonstruktion (d.h. der Lokalisation der mobilen Geräte 10, 11) ist. Die Güte der Gesamt-Distanzabschätzung zwischen zwei oder mehr mobilen Geräten 10, 11 hängt von der Gestalt der Menge der Minimal-Distanzabschätzungen ab. Bei mehr als zwei Gegenständen 10, 11 wird eine geeignete Norm für die Abstände zwischen den Gegenständen 10, 11, wie z.B. ein Minimum der Einzelgüten verwendet.

Es wird ein Grenzwert definiert, der bestimmt, ab wann eine Gesamt-Distanzabschätzung eine ausreichende Güte besitzt. Die Güte einer Gesamt-Distanzabschätzung wird nachfolgend als Abschätzungsgüte bezeichnet. Um die Abschätzungsgüte zu ermitteln, bieten sich verschiedene Heuristiken an.

Es ist möglich die Abschätzungsgüte abhängig von der Anzahl der Minimal-Distanzabschätzungen zu definieren. Hierzu bedarf es eines Grenzwertes, der angibt, wie viele Minimal-Distanzabschätzungen notwendig sind für eine volle Abschätzungsgüte. Die folgende Formel gibt an, wie die Abschätzungsgüte berechnet werden kann.

Falls Anzahl(Minimal-Distanzabschätzungen) < Grenzwert:

$$\Rightarrow G_{Grenzwert} = \text{Anzahl (Minimal-Distanzabschätzungen)} / \text{Grenzwert} \quad \text{Falls Anzahl(Minimal-Distanzabschätzungen)} \geq \text{Grenzwert:}$$

$$\Rightarrow G_{Grenzwert} = 1$$

mit

$G_{Grenzwert}$ : Güte der Gesamt-Distanzabschätzung ermittelt mit Hilfe von einem Grenzwert bezüglich der Anzahl der Minimal-Distanzabschätzungen

Anzahl(Minimal-Distanzabschätzungen): Anzahl der Minimal-Distanz-Abschätzungen Grenzwert: Festzulegender Grenzwert

Die Güte einer Gesamt-Distanzabschätzung kann auch über die Gestalt eines Histogramms definiert werden, das zu diesem Zweck aus einer Untermenge der Minimal-Distanzabschätzungen erstellt wird. Die hierzu herangezogene Untermenge der vorhandenen Minimal-Distanzabschätzungen wird bestimmt durch alle Minimal-Distanzabschätzungen, die zur charakteristischen Distanz-Klasse gehören oder in ihrer Distanz-Abschätzung kleiner sind. Aus diesen Minimal-Distanzabschätzungen wird ein Histogramm mit N Klassen gebildet. Die Klassenweite wird hierbei so festgelegt, dass die Minimal-Distanzabschätzung mit dem höchsten Wert gerade noch in die letzte Klasse eingeordnet wird. Dieses so entstandene Histogramm wird mit einem Referenz-Histogramm verglichen. Das Referenz-Histogramm ist das zu erwartende, perfekte Histogramm mit N Klassen, das eine Gleichverteilung der Klangquellen annimmt. Dabei wird das zu erwartende Referenzhistogramm so skaliert, dass die höchste Klasse dieselbe Häufigkeit aufweist wie das erstellte Histogramm. Die Summe aller Abweichungen geteilt durch die maximal mögliche Abweichung ergibt die Güte der Gesamt-Distanzabschätzung. Die maximale Abweichung ist die Summe aller Häufigkeiten des vorher skalierten zu erwartenden Referenz-Histogramms.

Die Abschätzungsgüte kann auf vielfältige Weise genutzt werden. Zum Beispiel kann sie dazu dienen, Gesamt-Distanzabschätzungen zu ignorieren, solange diese eine unzureichende Güte aufweisen. Eine andere Möglichkeit ist es, die Güte als Relevanz für die Topologie-Rekonstruktion (d.h. für die Lokalisation) heranzuziehen.

Es ist möglich, die Lokalisation der mobilen Geräte 10, 11 durch ein Modell zu simulieren, in denen die Geräte 10, 11 als Massen angenommen werden, die mit Federn verbunden sind. Die Abschätzungsgüte kann von einer solchen "Masse-Sprungfeder"-Simulation dazu genutzt werden, die Festigkeit der einzelnen Federn proportional zu dieser Güte der verursachenden Gesamt-Distanzabschätzung zu definieren. So hätten Gesamt-Distanzabschätzungen niedriger Güte weniger Einfluss auf das Ergebnis der Topologie-Rekonstruktion als jene mit einer höheren Güte.

Mit Hilfe eines geeigneten Verfahrens kann anschließend das relative Lagebild der Mikrofonvorrichtungen 1 zueinander ermittelt werden. Geeignete Verfahren zur Berechnung der relativen Lage der Mikrofonvorrichtungen 1 oder den mobilen Geräten 10, 11 aufgrund der Gesamt-Distanzabschätzungen sind zum Beispiel Masse-Sprungfeder-Simulationen oder die "Multidimensionale Skalierung". Bei der Masse-Sprungfeder-Simulation werden die einzelnen mobilen Geräte 10, 11 als Punktmassen repräsentiert. Jede vorhandene Gesamt-Distanzabschätzung resultiert in einer Sprungfeder zwischen den beiden Punktmassen mit der Länge der Gesamt-Distanzabschätzung, die diese mobilen Geräte 10, 11 repräsentieren. Iterativ wird die Energie der einzelnen Sprungfedern minimiert bis ein stabiles Gleichgewicht hergestellt ist. Diese letzte stabile Konfiguration wird wiederum als relatives Lagebild der mobilen Geräte 10, 11 interpretiert.

Kann davon ausgegangen werden, dass sich mobilen Geräte 10, 11 in einer Ebene befinden, so sollte der Raum für die vorhergehend beschriebene Rekonstruktion der Topologie (d.h. der Lokalisation der mobilen Geräte 10, 11) ebenfalls 2-dimensional sein. Ist dies nicht der Fall, so muss die Rekonstruktion der Topologie mit 3-dimensionalen Koordinaten arbeiten.

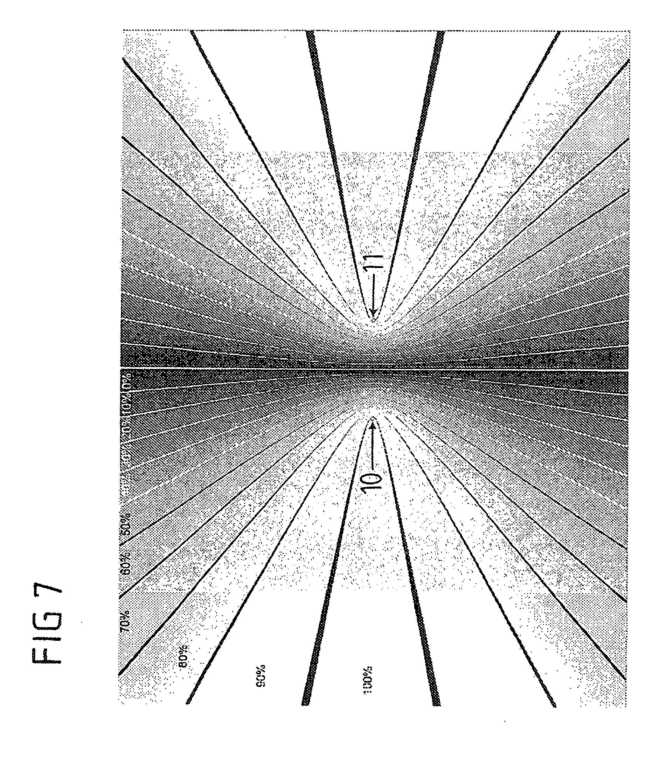

In Fig. 7 ist dargestellt, wie sich die geometrische Anordnung der akustischen Quelle 3 relativ zu den beiden Gegenständen 10, 11 auf die Schätzung des Abstandes A auswirkt (siehe Fig. 1 für die geometrische Anordnung). Grundsätzlich weist jede Messung der akustischen Signale einen Fehler auf, der abhängig von der relativen Anordnung der Quelle 3 und der Gegenstände 10, 11 ist.

In Fig. 7 sind die beiden Gegenstände 10, 11 fest angeordnet und etwa mittig in Fig. 7 dargestellt. Je nach geometrischer Anordnung der akustischen Quelle 3 ergeben sich unterschiedliche Fehler. In Fig. 7 ist die Güte der Messung in Form von Isolinien dargestellt. Liegen die akustische Quelle 3 und die beiden Gegenstände 10, 11 auf einer Geraden und die Quelle 3 liegt nicht genau zwischen den beiden Gegenständen 10, 11, ist der Fehler am geringsten, d.h. die Güte der Messung liegt bei nahe 100%. Im anderen Extrem liegt die akustische Quelle 3 auf der Mittelsenkrechten zwischen den Gegenständen 10, 20, so dass die Güte der Messungen hier gegen 0 geht. Zwischen den Extremen gibt es die in Fig. 7 dargestellten Zwischenwerte.

Die Erfindung beschränkt sich in ihrer Ausführung nicht auf die vorstehend angegebenen bevorzugten Ausführungsbeispiele. Vielmehr ist eine Anzahl von Varianten denkbar, die von dem erfindungsgemäßen Verfahren und der erfindungsgemäßen Vorrichtung auch bei grundsätzlich anders gearteten Ausführungen Gebrauch machen.

Bezugszeichenliste

1 Mikrofonvorrichtung
2 akustisches Signal
3 akustische Quelle
4 Datenverarbeitungsvorrichtung (externer Teil)
5 Muster im akustischen Signal
6 Zeitsynchronisierung
7 Datenverarbeitungsvorrichtung (interner Teil)

10 erstes mobiles Gerät, erster Gegenstand
11 zweites mobiles Gerät, zweiter Gegenstand

A Abstand zwischen zwei mobilen Geräten (Gegenständen)

**Patentansprüche**

1. Verfahren zur wahrscheinlichsten Distanzabschätzung von mindestens einem mobilen Gegenstand (10) zu mindestens einem anderen mobilen Gegenstand (11), wobei die Gegenstände (10, 11) jeweils eine Mikrofonvorrichtung (1) aufweisen, bei dem

   a) mit den Mikrofonvorrichtungen (1) der Gegenstände (10, 11) mindestens ein akustisches Signal (2) mindestens einer Quelle (3) empfangen wird,
   b) mit einer Datenverarbeitungsvorrichtung (4, 7) der zeitliche Verlauf der jeweils empfangenen akustischen Signale (2) automatisch anhand vorgegebener Kriterien nach mindestens einem Muster (5) durchsucht wird, wobei
   c) das mindestens eine Muster (5) ein Onset des mindestens einen akustischen Signals (2) ist oder ein Onset des mindestens einen akustischen Signals (2) aufweist und das Onset (5) ein Ton, ein Geräusch, ein Tonmuster und / oder ein Geräuschmuster ist, das aus der Umgebung der Gegenstände (10, 11) stammt, nämlich ein ambientes Geräusch und / oder ein ambienter Ton und

d) in zeitlicher Abhängigkeit vom Empfang des mindestens einen Musters (5) mittels einer Zeitsynchronisation (6), über die die Gegenstände (10, 11) gekoppelt sind, insbesondere über ein Funksignal, und

mit Hilfe des gemessenen Laufzeitunterschieds zwischen den jeweils mindestens zwei ermittelten und als wahrscheinlich gleich eingestuften Mustern (5) im akustischen Signal jeweils ein Wert für mindestens eine Distanzabschätzung ($Weg_{min}$) zwischen den mobilen Gegenständen (10, 11) ermittelt wird, der eine Entfernung (A) zwischen den mindestens zwei Mikrofonvorrichtungen (1) als Minimal-Distanzabschätzung darstellt, **dadurch gekennzeichnet, dass**

e) mittels der Datenverarbeitungsvorrichtung (4, 7) eine statistische Analyse über eine Reihe von Minimal-Distanzabschätzungen zur Bestimmung der wahrscheinlichsten Distanzabschätzung der Gegenstände (10, 11) ausgeführt wird, und die statistische Analyse eine Auswertung einer Klasseneinteilung von Distanzmessungen umfasst, wobei die Maximal-Häufigkeit der aggregierten Minimal-Distanzabschätzungen die charakteristische Distanz-Klasse bildet.

2. Verfahren nach Anspruch 1, **dadurch gekennzeichnet, dass** der mindestens eine Gegenstand als mobiles Gerät (10, 11), nämlich als Mobiltelefon oder tragbarer Computer ausgebildet ist.

3. Verfahren nach Anspruch 1 oder 2, **dadurch gekennzeichnet, dass** das mindestens eine Muster (5) ein Onset des mindestens einen akustischen Signals (2), nämlich eine plötzliche Lautstärkeänderung und/oder eine Schalldruckänderung nach einer vorhergehenden Phase relativer Ruhe und/oder ein auf Grund des Doppler-Effektes generiertes Signal ist.

4. Verfahren nach mindestens einem der vorhergehenden Ansprüche, **dadurch gekennzeichnet, dass** die Durchsuchung nach dem mindestens einen Muster (5) auf Grund einer Eigenschaft des mindestens einen akustischen Signals (2) erfolgt, die unabhängig vom Ausbreitungsweg des akustischen Signals (2) ist.

5. Verfahren nach mindestens einem der vorhergehenden Ansprüche, **dadurch gekennzeichnet, dass** das mindestens eine Muster (5) durch eine Frequenzanalyse, mittels einer dominierenden Frequenz, anhand der Amplitude des mindestens einen akustischen Signals (2), auf Grund der Anzahl der Nulldurchgänge, eine Lauflängencodierung und/oder der Wellenform des mindestens einen akustischen Signals (2) erkannt und / oder charakterisiert wird.

6. Verfahren nach mindestens einem der vorhergehenden Ansprüche, **dadurch gekennzeichnet, dass** aus den zeitlichen Daten des Eintreffens des mindestens einen Musters (5) und den daraus resultierenden unterschiedlichen Laufzeiten bei mindestens zwei Gegenständen (10, 11) automatisch ein Abstand (A) zwischen den beiden Gegenständen (10, 11) ermittelt wird.

7. Vorrichtung zur Abschätzung der wahrscheinlichsten Distanz von mindestens einem mobilen Gegenstand (10) zu mindestens einem anderen mobilen Gegenstand (11), wobei die Gegenstände (10) jeweils eine Mikrofonvorrichtung (1) aufweisen, mit der mindestens ein akustisches Signal (2) mindestens einer akustischen Quelle (3) empfangbar ist, mit einer Datenverarbeitungsvorrichtung (4, 7) zum automatischen Durchsuchen des zeitlichen Verlaufs der jeweils empfangenen akustischen Signale (2) anhand vorgegebener Kriterien zur Ermittlung mindestens eines Musters (5), mit einem Mittel zur Detektion mindestens eines Musters (5) des mindestens einen akustischen Signals (2) mit mindestens einem Onset, wobei das Onset (5) ein Ton, ein Geräusch, ein Tonmuster und / oder ein Geräuschmuster ist, das aus der Umgebung der Gegenstände (10, 11) stammt, nämlich ein ambientes Geräusch und / oder ein ambienter Ton und einem Mittel zur Distanzschätzung zwischen den Gegenständen (10, 11) in Abhängigkeit vom Empfang des mindestens einen Musters (5), wobei die Gegenstände (10, 11) über eine Zeitsynchronisierung (6), insbesondere über ein Funksignal, gekoppelt sind, wobei mit Hilfe des gemessenen Laufzeitunterschieds zwischen jeweils mindestens zwei ermittelten und als wahrscheinlich gleich eingestuften Mustern (5) im akustischen Signal jeweils ein Wert für die mindestens eine Distanzabschätzung ($Weg_{min}$) zwischen den mobilen Gegenständen (10, 11) ermittelt wird, der eine Entfernung (A) zwischen den zwei Mikrofonvorrichtungen (1) als Minimal-Distanzabschätzung darstellt, **gekennzeichnet durch** ein Mittel zur statistischen Analyse einer Reihe von Minimal-Distanzabschätzungen der Gegenstände (10, 11) zur Bestimmung der wahrscheinlichsten Distanzabschätzung der Gegenstände (10, 11), wobei die statistische Analyse eine Auswertung einer Klasseneinteilung von Distanzmessungen ist, wobei die Maximal-Häufigkeit der aggregierten Minimal-Distanzabschätzungen die charakteristische Distanz-Klasse darstellt.

**8.** Vorrichtung nach Anspruch 7, **gekennzeichnet durch** durch ein Mittel zur Detektion mindestens eines Musters (5) des mindestens einen akustischen Signals (2) mit einer plötzlichen Lautstärkeänderung und / oder einer Schalldruckänderung nach einer vorhergehenden Phase relativer Ruhe und/oder eines auf Grund des Doppler-Effektes generierten Signals.

**9.** Vorrichtung nach Anspruch 7 oder 8, **gekennzeichnet durch** ein Mittel zur Durchsuchung nach dem mindestens einen Muster (5) auf Grund einer Eigenschaft des mindestens einen akustischen Signals (2), wobei die Eigenschaft unabhängig vom Ausbreitungsweg des akustischen Signals (2) ist.

**10.** Vorrichtung nach mindestens einem der Ansprüche 7 bis 9, **gekennzeichnet durch** ein Mittel zur Frequenzanalyse des mindestens einen Musters (5), unter Verwendung einer dominierenden Frequenz, der Amplitude des mindestens einen akustischen Signals (2) und/oder der Wellenform des mindestens einen akustischen Signals (2).

**11.** Vorrichtung nach mindestens einem der Ansprüche 8 bis 10, **dadurch gekennzeichnet, dass** mit der Datenverarbeitungsvorrichtung (4, 7) automatisch aus den zeitlichen Daten des Eintreffens des mindestens einen Musters (5) und den daraus resultierenden unterschiedlichen Laufzeiten bei mindestens zwei Gegenständen (10, 11) automatisch ein Abstand (A) zwischen den beiden Gegenständen (10, 11) ermittelbar ist.

**12.** Vorrichtung nach mindestens einem der Ansprüche 7 bis 11 **dadurch gekennzeichnet, dass** der mindestens eine Gegenstand als mobiles Gerät (10, 11), nämlich als Mobiltelefon oder tragbarer Computer ausgebildet ist.

**Claims**

**1.** A method for estimating the most probable distance from at least one mobile object (10) to at least one other mobile object (11), wherein the objects (10, 11) each include a microphone device (1), in which

  a) with the microphone devices (1) of the objects (10, 11) at least one acoustic signal (2) of at least one source (3) is received,
  b) with a data processing device (4, 7) the temporal course of each of the received acoustic signals (2) is searched automatically with reference to specified criteria for at least one pattern (5), wherein
  c) the at least one pattern (5) is an onset of the at least one acoustic signal (2) or includes an onset of the at least one acoustic signal (2) and the onset (5) is a tone, a sound, a tone pattern and/or a sound pattern which originates from the environment of the objects (10, 11), namely an ambient sound and/or an ambient tone, and
  d) in temporal dependence on the receipt of the at least one pattern (5) by means of a time synchronization (6), via which the objects (10, 11) are coupled, in particular via a radio signal, and

by means of the measured runtime difference between the at least two determined patterns (5) classified as probably identical in the acoustic signal a value each is determined for at least one estimated distance ($Weg_{min}$) between the mobile objects (10, 11), which represents a distance (A) between the at least two microphone devices (1) as minimum estimated distance,
**characterized in that**

  e) by means of the data processing device (4, 7) a statistical analysis is carried out over a series of minimum estimated distances for determining the most probable estimated distance of the objects (10, 11), and the statistical analysis comprises an evaluation of a class division of distance measurements, wherein the maximum frequency of the aggregated minimum estimated distances forms the characteristic distance class.

**2.** The method according to claim 1, **characterized in that** the at least one object is formed as mobile device (10, 11), namely as mobile phone or portable computer.

**3.** The method according to claim 1 or 2, **characterized in that** the at least one pattern (5) is an onset of the at least one acoustic signal (2), namely a sudden change in loudness and/or a change in sound pressure after a preceding phase of relative silence and/or a signal generated because of the Doppler effect.

**4.** The method according to at least one of the preceding claims, **characterized in that** searching for the at least one pattern (5) is effected on the basis of a property of the at least one acoustic signal (2), which is independent of the propagation path of the acoustic signal (2).

**5.** The method according to at least one of the preceding claims, **characterized in that** the at least one pattern (5) is detected and/or **characterized by** a frequency analysis, by means of a dominant frequency, with reference to the amplitude of the at least one acoustic signal (2), on the basis of the number of zero crossings, a runlength coding and/or the waveform of the at least one acoustic signal (2).

**6.** The method according to at least one of the preceding claims, **characterized in that** from the temporal data of the arrival of the at least one pattern (5) and the resulting different runtimes for at least two objects (10, 11) a distance (A) between the two objects (10, 11) is determined automatically.

**7.** An apparatus for estimating the most probable distance from at least one mobile object (10) to at least one other mobile object (11), wherein the objects (10) each include a microphone device (1) with which at least one acoustic signal (2) of at least one acoustic source (3) can be received, with a data processing device (4, 7) for automatically searching the temporal course of the respectively received acoustic signals (2) with reference to specified criteria for identifying at least one pattern (5), with a means for detecting at least one pattern (5) of the at least one acoustic signal (2) with at least one onset, wherein the onset (5) is a tone, a sound, a tone pattern and/or a sound pattern which originates from the environment of the objects (10, 11), namely an ambient sound and/or an ambient tone and a means for estimating the distance between the objects (10, 11) in dependence on the receipt of the at least one pattern (5), wherein the objects (10, 11) are coupled via a time synchronization (6), in particular via a radio signal, wherein by means of the measured runtime difference between at least two determined patterns (5) classified as probably identical in the acoustic signal a value for the at least one estimated distance ($Weg_{min}$) between the mobile objects (10, 11) each is determined, which represents a distance (A) between the two microphone devices (1) as minimum estimated distance,
**characterized by**
a means for the statistical analysis of a series of minimum estimated distances of the objects (10, 11) for determining the most probable estimated distance of the objects (10, 11), wherein the statistical analysis is an evaluation of a class division of distance measurements, wherein the maximum frequency of the aggregated minimum estimated distances represents the characteristic distance class.

**8.** The apparatus according to claim 7, **characterized by** a means for detecting at least one pattern (5) of the at least one acoustic signal (2) with a sudden change in loudness and/or a change in sound pressure after a preceding phase of relative silence and/or a signal generated because of the Doppler effect.

**9.** The apparatus according to claim 7 or 8, **characterized by** a means for searching for the at least one pattern (5) on the basis of a property of the at least one acoustic signal (2), wherein the property is independent of the propagation path of the acoustic signal (2).

**10.** The apparatus according to at least one of claims 7 to 9, **characterized by** a means for the frequency analysis of the at least one pattern (5), by using a dominant frequency, the amplitude of the at least one acoustic signal (2) and/or the waveform of the at least one acoustic signal (2).

**11.** The apparatus according to at least one of claims 8 to 10, **characterized in that** with the data processing device (4, 7) a distance (A) between the two objects (10, 11) automatically can be determined from the temporal data of the arrival of the at least one pattern (5) and the resulting different runtimes for at least two objects (10, 11).

**12.** The apparatus according to at least one of claims 7 to 11, **characterized in that** the at least one object is formed as mobile device (10, 11), namely as mobile phone or portable computer.

**Revendications**

**1.** Procédé d'estimation probable de la distance entre au moins un objet mobile (10) et au moins un autre objet mobile (11), les objets (10, 11) comprenant chacun un dispositif à microphone (1), dans lequel

a) au moins un signal acoustique (2) provenant d'au moins une source (3) est reçu avec les dispositifs à microphones (1) des objets (10, 11),
b) le tracé en fonction du temps de chacun des signaux acoustiques (2) reçus fait l'objet d'une recherche automatique d'au moins un motif (5) avec un dispositif de traitement de données (4, 7) à l'aide de critères prédéterminés,

c) l'au moins un motif (5) étant une amorce de l'au moins un signal acoustique (2) ou comprenant une amorce de l'au moins un signal acoustique (2) et l'amorce (5) étant un son, un bruit, un motif de son et/ou un motif de bruit qui provient de l'environnement des objets (10, 11), à savoir un bruit ambiant et/ou un son ambiant et

d) en fonction temporelle de la réception de l'au moins un motif (5) à l'aide d'une synchronisation temporelle (6), par l'intermédiaire de laquelle les objets (10, 11) sont couplés, plus particulièrement par l'intermédiaire d'un signal radio, et

une valeur est déterminée pour au moins une estimation de distance (Weg$_{min}$) entre les objets mobiles (10, 11), à l'aide de la différence de temps entre les au moins deux motifs (5), déterminés et considérés comme probablement identiques dans le signal acoustique, qui représente une distance (A) entre les au moins deux dispositifs à microphones (1) en tant qu'estimation de distance minimale,
**caractérisé en ce que**

e) à l'aide du dispositif de traitement de données (4, 7), une analyse statistique est effectuée par l'intermédiaire d'une série d'estimations de distances minimales afin de déterminer l'estimation de distance la plus probable entre les objets (10, 11) et l'analyse statistique comprend une analyse d'une division en classes des mesures de distance, la fréquence maximale des estimations de distances minimales agrégées formant la classe de distance caractéristique.

2. Procédé selon la revendication 1, **caractérisé en ce que** l'au moins un objet est conçu comme un appareil mobile (10, 11), à savoir un téléphone mobile ou un ordinateur portable.

3. Procédé selon la revendication 1 ou 2, **caractérisé en ce que** l'au moins un motif (5) est une amorce de l'au moins un signal acoustique (2), à savoir une variation brusque du volume sonore et/ou une variation de la pression acoustique après une phase préalable de silence relatif et/ou un signal généré sur la base de l'effet Doppler.

4. Procédé selon au moins l'une des revendications précédentes, **caractérisé en ce que** le parcours a lieu selon l'au moins un motif (5) sur la base d'une propriété de l'au moins un signal acoustique (2) qui est indépendante du trajet de propagation du signal acoustique (2).

5. Procédé selon au moins l'une des revendications précédentes, **caractérisé en ce que** l'au moins un motif (5) est détecté et/ou **caractérisé par** une analyse de fréquence, à l'aide d'une fréquence dominante, à l'aide de l'amplitude de l'au moins un signal acoustique (2), sur la base du nombre de passages à zéro, d'un codage de longueur de plage et/ou de la forme d'onde de l'au moins un signal acoustique (2).

6. Procédé selon au moins l'une des revendications précédentes, **caractérisé en ce que**, à partir des données temporelles de l'arrivée de l'au moins un motif (5) et des temps de parcours différents qui en résultent pour au moins deux objets (10, 11), une distance (A) entre les deux objets (10, 11) est automatiquement déterminée.

7. Dispositif d'estimation de la distance la plus probable entre au moins un objet mobile (10) et au moins un autre objet mobile (11), les objets (10) comprenant chacun un dispositif à microphone (1), avec lequel au moins un signal acoustique (2) provenant d'au moins une source acoustique (3) peut être reçu, avec un dispositif de traitement de données (4, 7) pour le parcours automatique du tracé temporel des signaux acoustiques (2) reçus, à l'aide de critères prédéterminés pour la détermination d'au moins un motif (5), avec un moyen pour la détection d'au moins un motif (5) de l'au moins un signal acoustique (2) avec au moins une amorce, l'amorce (5) étant un son, un bruit, un motif de son et/ou un motif de bruit, qui provient de l'environnement des objets (10, 11), à savoir un bruit ambiant et/ou un son ambiant, et un moyen d'estimation de la distance entre les objets (10, 11) en fonction de la réception de l'au moins un motif (5), les objets (10, 11) étant couplés par l'intermédiaire d'une synchronisation temporelle (6), plus particulièrement par l'intermédiaire d'un signal radio, une valeur pour l'au moins une estimation de distance (weg$_{min}$) entre les objets mobiles (10, 11) étant déterminée à l'aide d'au moins deux motifs (5), déterminés et considérés comme probablement identiques, dans le signal acoustique, qui représente une distance (A) entre les deux dispositifs à microphones (1) en tant qu'estimation de distance minimale,
**caractérisé en ce que**
un moyen d'analyse statistique d'une série d'estimations de distance minimales des objets (10, 11) pour la détermination de l'estimation de distance la plus probable entre les objets (10, 11), l'analyse statistique étant une analyse d'une division en classes des mesures de distances, la fréquence minimale des estimations de distances minimales agrégées représentant la classe de distance caractéristique.

**8.** Dispositif selon la revendication 7, **caractérisé par** un moyen de détection d'au moins un motif (5) de l'au moins un signal acoustique (2) avec une variation brusque du volume sonore et/ou une variation de la pression acoustique après une phase préalable de silence relatif et/ou d'un signal généré sur la base de l'effet Doppler.

**9.** Dispositif selon la revendication 7 ou 8, **caractérisé par** un moyen de parcours, selon l'au moins un motif (5), sur la base d'une propriété de l'au moins un signal acoustique (2), la propriété étant indépendante du trajet de propagation du signal acoustique (2).

**10.** Dispositif selon au moins l'une des revendications 7 à 9, **caractérisé par** un moyen d'analyse de fréquence de l'au moins un motif (5), à l'aide d'une fréquence dominante, de l'amplitude de l'au moins un signal acoustique (2) et/ou de la forme d'onde de l'au moins un signal acoustique (2).

**11.** Dispositif selon au moins l'une des revendications 8 à 10, **caractérisé en ce que**, avec le dispositif de traitement de données (4, 7), une distance (A) entre les deux objets (10, 11) peut être déterminée automatiquement à partir des données temporelles de l'arrivée de l'au moins un motif (5) et des temps de parcours différents qui en résultent pour les au moins deux objets (10, 11).

**12.** Dispositif selon au moins l'une des revendications 7 à 11, **caractérisé en ce que** l'au moins un objet est conçu comme un appareil mobile (10, 11), à savoir un téléphone mobile ou un ordinateur portable.

FIG 1

# FIG 2

## FIG 2A

2

Hoch

oberer Schwellwert

Niedrig

unterer Schwellwert

Hoch

# FIG 3

# FIG 4

| Amplitude | 33 | 1 | 18 | 11 | 10 | 9 | 7 | 4 | 11 | 13 | 9 | 5 | 20 | 28 |
|---|---|---|---|---|---|---|---|---|---|---|---|---|---|---|
| Neg. dB | 0 | 30.4 | 5.3 | 9.5 | 10.4 | 11.3 | 13.5 | 18.3 | 9.5 | 8.1 | 11.3 | 16.4 | 4.3 | 1.4 |

# FIG 5

12 Nulldurchgänge

Null

t

# FIG 6

2

Hoch

oberer Schwellwert
Niedrig
unterer Schwellwert

Hoch

Laufzeitcodierung

| 10 | 10 | 13 | 11 | 12 | 9 | 4 | 4 | 5 |

| 2 | 3 | 2 | 18 | 1 | 1 | 6 | 8 | 6 |

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6941246 B1
- US 6792118 B1
- US 20060077759 A
- US 20060268795 A1
- US 2004137929 A1
- WO 2007001660 A2
- US 20020167862 A